# FASCICULE DE BREVET EUROPEEN

(11) **EP 1 289 322 B1**
(45) Date de publication et mention de la délivrance du brevet: **11.04.2012**
(21) Numéro de dépôt: 02291946.8
(22) Date de dépôt: 01.08.2002
(51) Int. Cl.: H04W 4/12

(54) **Système d'intéropérabilité entre messages MMS et messages SMS/EMS et procédé d'échange associé**
System zum Ermöglichen der Zusammenarbeit zwischen MMS und SMS/EMS Nachrichten und entsprechendes Verfahren
System providing interoperability between MMS and SMS/EMS messages and associated method

(30) Priorité: 27.08.2001 FR 0111131
(43) Date de publication de la demande: 05.03.2003
(60) Demande divisionnaire: 11185515.1
(73) Titulaire: Imerj, Limited, Grand Cayman (KY)
(72) Inventeur: Le Bodic, Gwenael, 92800 Puteaux (FR); Ricoeur, Jean-Luc, 75014 Paris (FR)
(74) Mandataire: Tolfts, Pippa Helen

(56) Documents cités:
- WO-A-99/66746
- 3GPP TS 23.140 V 4.3.0 releash 4 Universal Mobile Telecommunications System (UMTS) Multimedia Messaging service (MMS), Functional Description 24/07/2001 XP002202092
- 3GPP TS 23.040 V 3.5.0 Universal Mobile Telecommunications System (UMTS), Technical Realization of the Short Message Service (SMS) 22/08/2000 XP002202093

## Description

La présente invention concerne le domaine des messages reçus et/ou envoyés depuis et/ou vers des terminaux de radiocommunication, tels que des téléphones mobiles.

WO 99/66746 décrit un procédé de remise de messages dans un système de communications sans fil, au moyen du même protocole pour tous les types de message.

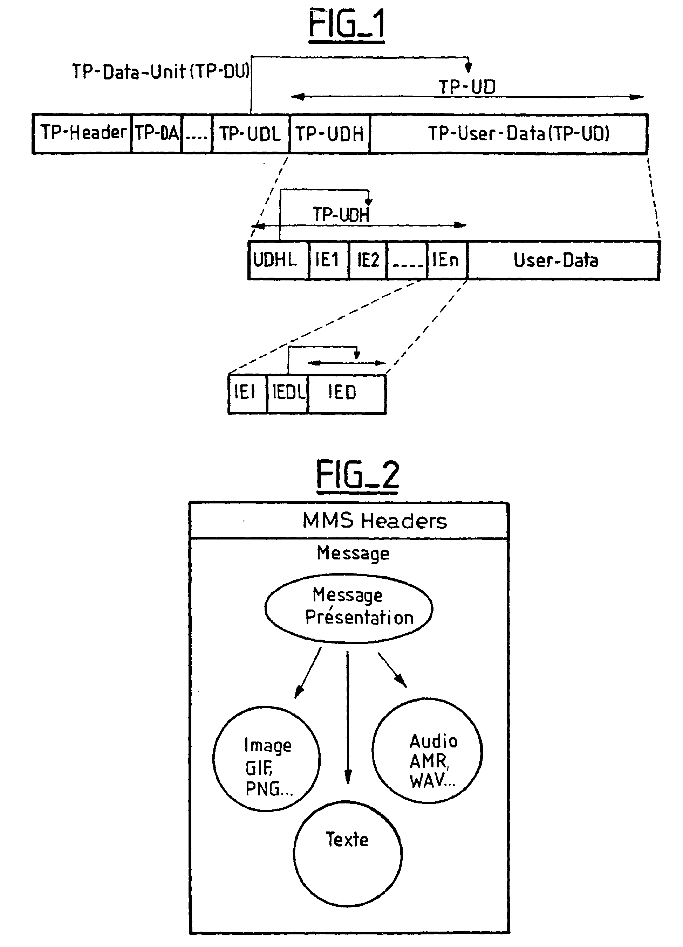

L'échange de messages courts, désignés par la suite comme SMS selon la terminologie anglaise de Short Message Service, a connu depuis quelques temps un essor considérable. Classiquement, un SMS est constitué d'un bloc unitaire de données (TPDU pour Transport Protocol Data Unit) dont une illustration schématique est donnée sur la figure 1. Ce bloc de données TPDU comporte un en-tête associé au protocole de transport utilisé (connu comme TP Header pour Transport Protocol Header en anglais) et des données d'utilisation (connues comme TP User Data). L'en-tête, TP Header, contient des informations de transmission telles que l'adresse de destination (TP-DA), qui peut être un numéro de téléphone ou une adresse électronique par exemple, l'identification du protocole de transport utilisé, qui peut être un transport par fichier, par hypertext, par radio ou autre, la longueur des données du message (TP-UDL), ainsi que d'autres informations relatives à l'acheminement du message, telles que l'heure, la présence d'un en-tête dans les données ou autres, certaines de ces informations étant obligatoires et d'autres facultatives. Les données du message SMS (TP User Data) comportent un en-tête connu sous le terme de User Data Header (TP-UDH) suivi du message lui-même, User Data (TP-UD).

Dans ses premiers développements, un message court ne comprenait que du texte sans aucunes données de type multimédia telles que des mélodies ou des images par exemple, et de fait ne contenait pas beaucoup d'information. Ainsi, un seul bloc de données (TPDU) pouvait transporter les informations à transmettre. Cependant, le développement de messages courts dits avancés, désignés par la suite comme EMS selon la terminologie anglaise de Enhanced Message Service, a récemment pris de l'ampleur et conduit à introduire une recommandation à ce sujet dans la norme SMS 3GPP TS 23.040. Un message avancé peut contenir beaucoup d'informations, ce qui oblige généralement à une concaténation des blocs de données (TPDU) pour transmettre les EMS à travers un réseau de radiocommunication.

Dans un message EMS, l'en-tête de données (TP-UDH) comprend une indication sur la longueur de l'en-tête (UDHL) et au moins un élément d'information (IE pour Information Element en anglais), suivi ensuite par les données du message (User Data). Or, les éléments d'information IE peuvent contenir des données multimédia à associer au message avancé EMS. Chaque élément d'information IE contient un champ d'identification (IEI) suivi d'un champ indiquant la longueur de l'élément (IEDL) suivi des données de l'élément (IED). Ainsi, le texte (User Data) du message EMS contiendra des appels à ces différents éléments IE définis dans l'en-tête à intégrer aux données du message transmis.

Un nouveau type de message a récemment été développé consistant dans des messages multimédia, désignés par la suite comme MMS (pour Multimedia Messaging Service). Les messages MMS, dont une illustration schématique est donnée sur la figure 2, ont une structure et un protocole de transmission complètement différents des messages SMS ou EMS, et sont normalisés selon la recommandation 3GPP TS 23.140. Les messages MMS présentent une structure définie par l'IETF (RFC 2045) consistant dans un format fichier MIME (Multipurpose Internet Mail Extensions), avec un en-tête et un corps de message pouvant contenir des images, des mélodies, du texte et une présentation des éléments graphiques à l'écran ainsi qu'une synchronisation temporelle entre certains éléments. Un message MMS peut inclure des données multimédia beaucoup plus denses que celles transmises par des EMS et permet des présentations multimédia plus riches, du type de celles accessibles sur des ordinateurs par exemple. Les messages MMS sont généralement transmis selon un protocole de transport sur WAP (pour Wireless Application Protocol).

L'échange de messages MMS suppose la présence d'un serveur particulier dédié aux messages MMS dans le réseau de radiocommunication qui est distinct du serveur dédié aux messages SMS et EMS. En outre, l'envoi et/ou la réception de messages MMS par un terminal est soumis à l'installation d'un logiciel d'application particulier qui nécessite l'allocation de grandes capacités de mémoire et de processeur. Or, les terminaux bas coût ou d'une ancienne génération ne peuvent supporter une telle application, alors même qu'ils permettent l'échange de SMS et/ou de EMS.

L'utilisation de messages MMS est donc limitée aux seuls terminaux capables de supporter une telle application, ce qui réduit considérablement l'intérêt d'échanger de tels messages et freine l'essor de ce nouveau type de messages. De plus, certains terminaux comportent l'application MMS mais rejettent l'application EMS tout en conservant la possibilité d'échanger des SMS.

En outre, différentes versions de messages EMS ont déjà été développées, les dernières étant généralement compatibles avec les précédentes. Cependant, l'envoi d'un message EMS depuis un terminal intégrant une nouvelle version (release 5 par exemple) vers un terminal ne possédant que l'ancienne version (release 4 par exemple) peut entraîner un défaut d'affichage du contenu du message.

L'invention a donc pour objectif de répondre au problème de l'interopérabilité entre le système de messagerie MMS et le système de messagerie SMS/EMS, ainsi qu'entre systèmes de messagerie EMS de versions différentes en proposant une adaptation de contenu des messages transmis selon les possibilités de réception du terminal destinataire du message.

Plus spécifiquement, l'invention concerne un procédé d'échange de messages entre un premier terminal mobile appartenant à un premier domaine de messagerie et au moins un second terminal mobile appartenant à un second domaine de messagerie, chaque domaine comprenant au moins un réseau de radiocommunication, un serveur de messagerie d'une première norme de messages courts et/ou avancés, dite EMS/SMS (Enhance Message Service/ Short Message Service) et/ou un serveur de messagerie d'une seconde norme de messages multimédia, dite MMS (Multimedia Message Service), caractérisé en ce que le procédé comporte les étapes suivantes :
- initiation d'un message selon une première norme, EMS ou MMS, depuis un premier terminal à destination d'au moins un second terminal non compatible avec la première norme du message initié ;
- transmission du message par le serveur de messagerie de ladite première norme à une passerelle de messagerie comprenant une base de données constituée d'une table des profiles de messagerie des terminaux appartenant au domaine de messagerie auquel ladite passerelle est associée ;
- conversion par la passerelle de messagerie du message initié selon la première norme, EMS ou MMS, en message selon une seconde norme, EMS ou MMS, supportée par le terminal destinataire ;
- transmission du message converti selon ladite seconde norme par la passerelle de messagerie au serveur de messagerie de ladite seconde norme ;
- délivrance dudit message selon la seconde norme par ledit serveur de la seconde norme au terminal destinataire.

Selon un premier mode de réalisation, la conversion d'un message initié selon une première norme en message selon une seconde norme est effectuée par la passerelle de messagerie du second domaine du terminal destinataire, ladite passerelle procédant à une étape de détermination de la (des) norme(s) de message supportée(s) par le terminal destinataire répertorié de sa table des profiles de messagerie.

Selon un second mode de réalisation, la conversion d'un message initié selon la norme EMS en message selon la norme MMS est effectuée par la passerelle de messagerie du premier domaine du terminal initiateur, ledit message EMS incluant l'adresse de ladite passerelle en en-tête et comprenant un élément d'information indiquant qu'une donnée de type MMS est incluse dans les données du message EMS, ladite conversion du message incluant une étape d'extraction de cette donnée MMS.

Selon une application, la conversion est effectuée entre un message EMS d'une première version en message EMS d'une seconde version.

Selon une caractéristique, la table des profiles contenue dans la passerelle de messagerie d'un domaine de messagerie est mise à jour par envoi d'un message court (SMS), dit message de mise à jour, depuis un terminal répertorié dans ladite table à destination de la passerelle de messagerie, ledit message de mise à jour comprenant un élément d'information contenant le(s) profile(s) de messagerie dudit terminal.

Selon un premier mode de réalisation, la mise à jour de la table des profiles est effectuée automatiquement par le terminal lors d'un changement de ses capacités de traitement des messages.

Selon un second mode de réalisation, la mise à jour de la table des profiles est effectuée sur commande de l'utilisateur du terminal.

Selon un application, les domaines de messagerie des terminaux initiateur et destinataire du message sont confondus.

La présente invention concerne également un système de messagerie associé à au moins un domaine de messagerie comprenant au moins un réseau de radiocommunication, un serveur de messagerie d'une première norme de messages courts et/ou avancés, dite EMS/SMS (Enhance Message Service/ Short Message Service) et/ou un serveur de messagerie d'une seconde norme de messages multimédia, dite MMS (Multimedia Message Service), caractérisé en ce que ledit domaine de messagerie comprend en outre une passerelle de messagerie comportant une base de données constituée d'une table des profiles de messagerie des terminaux appartenant au domaine de messagerie, ladite passerelle de messagerie étant apte à convertir un message émis dans une première norme (EMS, MMS) en message d'une seconde norme (EMS/MMS).

Selon une caractéristique, la passerelle de messagerie relie au moins le serveur de messagerie de la première norme dite EMS/SMS et le serveur de messagerie de la seconde norme dite MMS d'un même domaine.

Selon une autre caractéristique, la passerelle de messagerie d'un premier domaine est reliée à la passerelle de messagerie d'un second domaine.

Selon l'invention, on définit un message court selon la norme dite SMS (Short Message Service) initié par un terminal de radiocommunication, ledit message SMS comprenant des données dites utiles constituées d'un en-tête comprenant des éléments d'information et d'un texte de données, chaque élément d'information comprenant un champ d'identification suivi d'un champ indiquant la longueur des données de l'élément suivi des données de l'élément, caractérisé en ce que l'en-tête comprend un élément d'information dit « de profile » dont l'identifiant est associé à la mise à jour d'un profile de messagerie et dont les données indiquent la(les) norme(s) de messages supporté(es) par le terminal initiateur.

Selon l'invention, on définit également un message avancé selon la norme dite EMS (Enhance Message Service) initié par un terminal de radiocommunication, ledit message EMS comprenant des données dites utiles constituées d'un en-tête comprenant des éléments d'information et d'un texte de données, chaque élément d'information comprenant un champ d'identification suivi d'un champ indiquant la longueur des données de l'élément suivi des données de l'élément, caractérisé en ce que l'en-tête comprend un élément d'information dit « MMS » dont l'identifiant indique la présence d'une information de type MMS contenue dans les données du message et dont les données indiquent la longueur de cette information de type MMS, ladite information de type MMS étant constituée d'au moins un en-tête de message MMS.

Les particularités et avantages de la présente invention seront mieux comprises à la lecture de la description qui suit, donnée à titre d'exemple illustratif et non limitatif, faite en référence aux figures annexées dans lesquelles :
- La figure 1, déjà décrite, illustre schématiquement la structure et les paramètres d'un message SMS/EMS ;
- La figure 2, déjà décrite, illustre schématiquement la structure d'un message MMS ;
- la figure 3 illustre schématiquement un système de messagerie associé à un réseau de radiocommunication donné ;
- la figure 4 illustre schématiquement la passerelle de messagerie selon l'invention ;
- la figure 5 est un exemple de table de profiles gérée par la passerelle de messagerie selon l'invention ;
- la figure 6a illustre schématiquement un SMS d'indication de profile ;
- la figure 6b illustre schématiquement le chemin emprunté par un message correspondant à une mise à jour du profile de messagerie ;
- la figure 7 illustre schématiquement l'ensemble des chemins possibles pouvant être empruntés par un message ;
- la figure 8a illustre schématiquement le chemin emprunté par un message correspondant à un envoi direct d'un SMS/EMS vers un MMS ;
- la figure 8b illustre schématiquement un EMS destiné à un terminal ne pouvant recevoir que des messages MMS ;
- la figure 9 illustre schématiquement le chemin emprunté par un message correspondant à un envoi indirect d'un SMS/EMS vers un MMS ;
- la figure 10 illustre schématiquement le chemin emprunté par un message correspondant à un envoi direct d'un MMS vers un SMS/EMS.

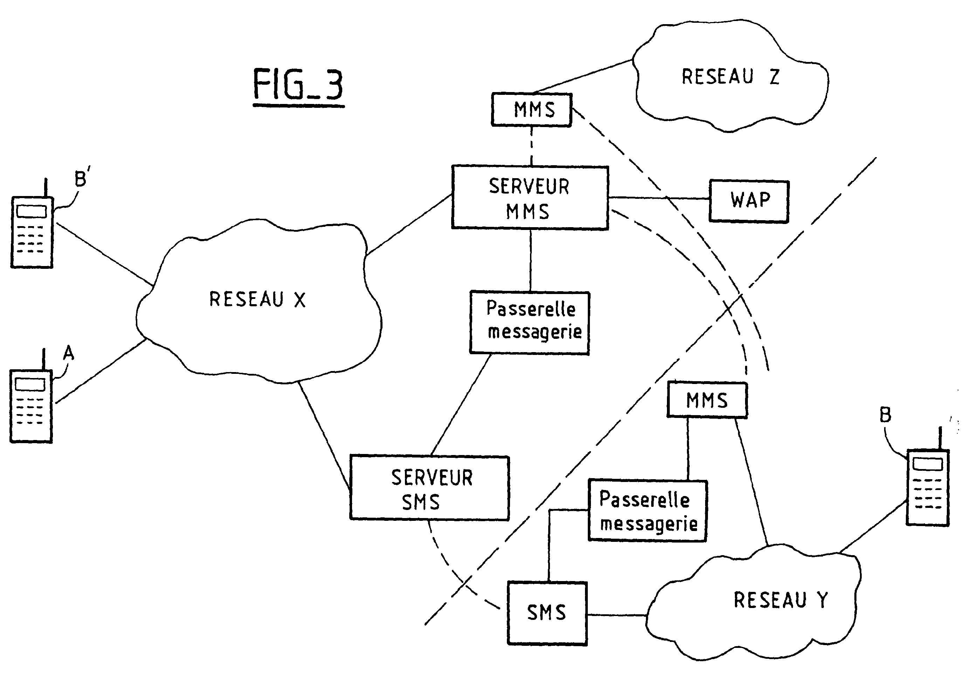

En référence à la figure 3, des terminaux mobiles A et B émettent et reçoivent des messages transmis à travers un réseau de radiocommunication. Les messages échangés peuvent être des messages de type SMS ou EMS, ou des messages de type MMS, ou des messages de type électronique (e-mail), ou autre. Les messages sont transférés par le réseau de radiocommunication depuis le terminal émetteur vers le serveur de messagerie concerné. En général, chaque réseau de radiocommunication possède son propre serveur SMS qui est en contact avec les serveurs SMS des autres réseaux, ainsi que son propre serveur relais MMS qui est généralement relié à une passerelle de connexion du type WAP et qui est en contact avec les serveurs relais MMS des autres réseaux. En revanche, aucune liaison directe n'existe entre le serveur SMS et le serveur MMS d'un même réseau.

Selon une caractéristique essentielle de l'invention, le système de messagerie du réseau comporte, en sus des serveurs spécifiques SMS et MMS ou autre, une passerelle de messagerie reliée aux dits serveurs SMS et MMS, et éventuellement d'autres serveurs.

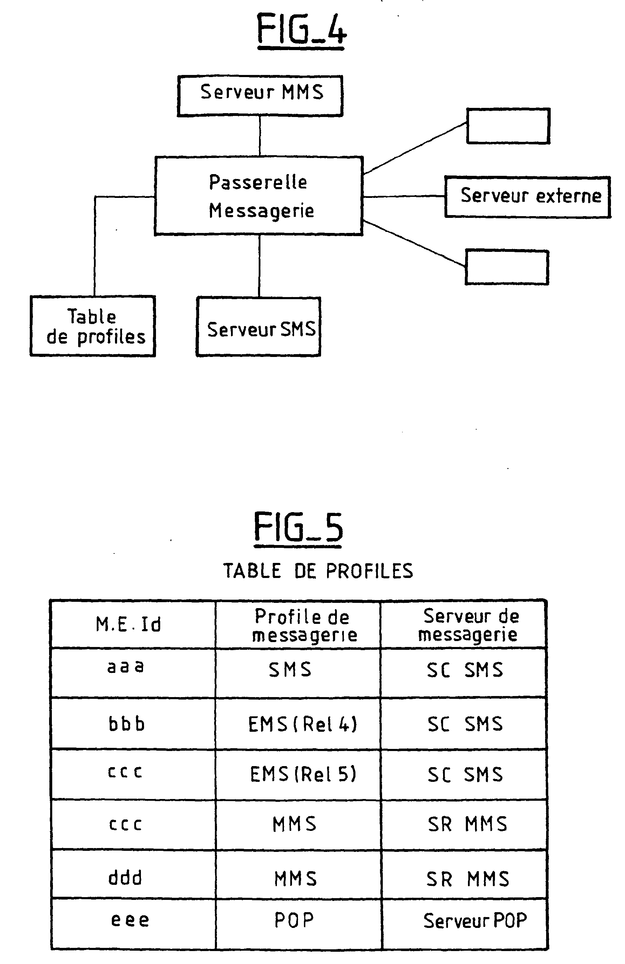

Cette passerelle de messagerie, illustrée schématiquement sur la figure 4, permet de gérer l'interopérabilité entre les systèmes de messagerie distincts que sont les SMS/EMS et les MMS en particulier, mais non exclusivement. Une telle passerelle comporte des liaisons vers plusieurs serveurs de messagerie de normes différentes, tels que par exemple un serveur MMS, un serveur SMS, un serveur POP3 (Post Office Protocol), un serveur IMAP (Internet Message Access Protocol), un serveur Internet, ou autre.

La passerelle de messagerie a pour fonction de convertir les messages échangés dans le domaine dont elle dépend d'une norme à une autre, cette conversion étant effectuée selon les besoins et en fonction du type de message émis et des capacités de réception du terminal destinataire. Par domaine de messagerie on entend désigner l'ensemble des entités nécessaires à la réalisation d'un service de messagerie, c'est à dire au moins un réseau, au moins un serveur de messagerie (SMS et/ou MMS) et au moins une passerelle de messagerie.

En particulier, la passerelle de messagerie selon l'invention contient une base de données constituée d'une table des profiles des terminaux accédant au domaine considéré. Un exemple d'une telle table est donné par la figure 5. Chaque terminal est répertorié et son profile de messagerie est spécifié, et à chaque profile est associé un serveur de messagerie donné.

Ainsi, le terminal aaa ne supporte que des messages courts de type SMS, soit parce qu'il s'agit d'un terminal bas coût ou d'une ancienne génération, soit parce que l'utilisateur du terminal ne souhaite recevoir que ce type de message. Un message quelconque destiné à ce terminal aaa sera nécessairement orienté vers le serveur SMS après avoir été converti au format SMS par la passerelle de messagerie si ce n'était pas le format d'origine.

De même, le terminal ddd ne possède un logiciel d'application que pour l'échange de MMS. Un message quelconque destiné à ce terminal ddd sera nécessairement orienté vers le serveur MMS après avoir été converti à ce format par la passerelle de messagerie si ce n'était pas celui d'origine. En revanche, le terminal ccc peut interpréter des messages MMS ou des messages EMS de norme « release 5 » alors que le terminal bbb ne peut recevoir que des EMS de norme « release 4 » ce qui peut obliger la passerelle de messagerie à convertir un message EMS de norme « release 5 » avant de le transférer au terminal bbb.

D'autres configurations d'échange de différents types de messages peuvent être envisageables selon les applications souhaitées ou selon les développements de nouvelles normes de messagerie.

Le profile de messagerie attribué à chaque terminal d'un domaine de messagerie dans la table de profile de la passerelle de messagerie peut être défini de différentes manières. En particulier, le profile peut être :
(1) prédéfini par le fournisseur du service de messagerie au moment de la souscription audit service, ou
(2) mis à jour par demande explicite de l'utilisateur, ou
(3) fixé de manière automatique par le terminal lui-même lors d'une détection d'un changement dans les capacités de traitement des messages par le terminal mobile.

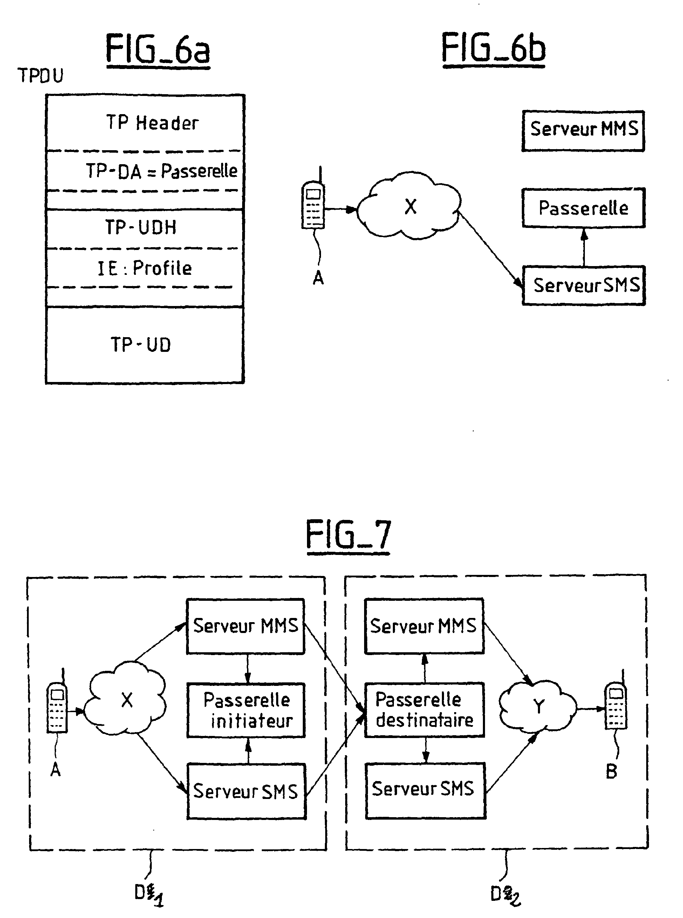

Les deux derniers modes de mise à jour, par exemple, peuvent être réalisés par l'envoi d'un SMS à destination de la passerelle de messagerie. A cet effet, comme illustré sur les figures 6a et 6b, le SMS envoyé comporte l'adresse de la passerelle dans son TP-DA et contient avantageusement un Element d'Information spécifique (IE) contenant le profile de messagerie dans son champ de donnée.

Le terminal A envoie le SMS de mise à jour de profile comme un SMS classique qui sera orienté par le serveur SMS vers l'adresse de destination, c'est à dire la passerelle de messagerie. Cette dernière est apte à interpréter un tel SMS et à mettre à jour sa table de donnée de profiles de manière adéquate en extrayant du SMS le paramètre du champ de donnée de l'élément d'information IE « profile ». Le SMS de mise à jour du profile de messagerie peut être envoyé par le terminal A de manière transparente pour l'utilisateur ou de manière volontaire par ledit utilisateur, si son équipement mobile le lui permet. Par exemple, un utilisateur, dont le terminal est techniquement en mesure de recevoir des MMS, peut décider de ne recevoir que des SMS, ou des EMS si son terminal le peut, pendant une période donnée, par exemple pour des raisons de coût de roaming à l'étranger ou pour une quelconque autre raison.

Plusieurs cas de figures d'échanges de messages sont succinctement décrits dans la suite sans préjugé de leur importance ou de leur fréquence d'apparition. La figure 7 illustre schématiquement l'ensemble des chemins possibles pouvant être empruntés par un message quelconque. Un terminal A est initiateur d'un message dans un premier domaine de messagerie D₁ constitué d'un réseau de radiocommunication X et comprenant une passerelle de messagerie et au moins un serveur SMS et un serveur MMS. Un terminal B destinataire de ce message appartient à un autre domaine de messagerie D₂ constitué d'un réseau de radiocommunication Y et comprenant une passerelle de messagerie et au moins un serveur SMS et un serveur MMS. Selon l'invention, l'ensemble des messages entrant dans un domaine de messagerie, quel que soit le type de message, est réceptionné par la passerelle de messagerie qui l'oriente vers le serveur adéquat du domaine destinataire.

Il est entendu que les domaines D₁ et D₂, ainsi que les réseaux X et Y peuvent être confondus. Il est à noter cependant qu'un même domaine de messagerie peut contenir plusieurs réseaux de radiocommunication, selon l'administration du système de messagerie en cause.

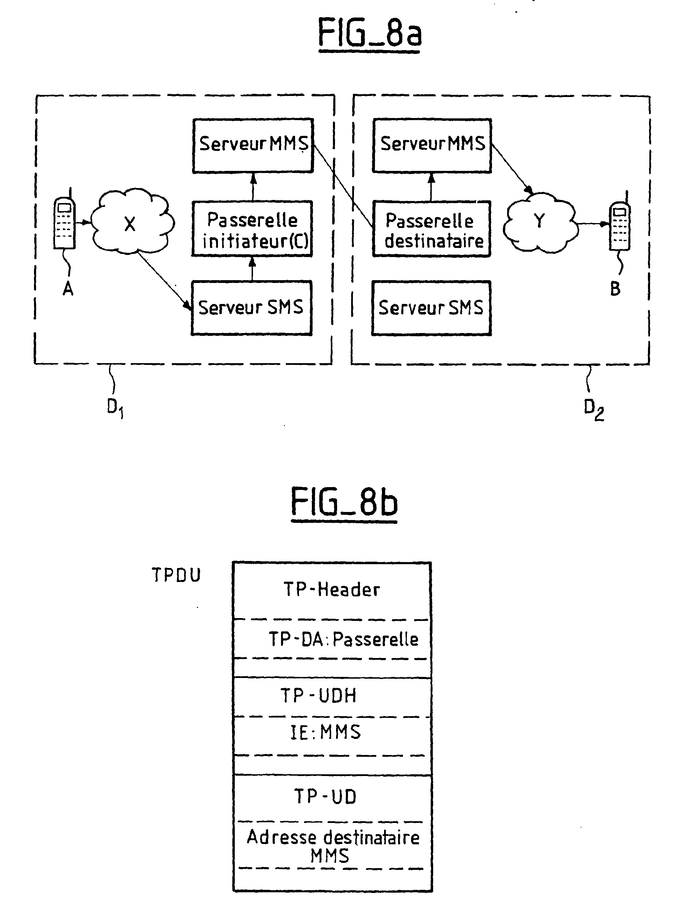

On considère tout d'abord le cas de la figure 8a dans lequel un terminal A est initiateur d'un message EMS à l'attention d'un terminal destinataire B ne supportant que des messages de type MMS, le terminal A étant averti de cette limitation du terminal B.

Le terminal A initiateur du message EMS sait que son destinataire est un terminal ne supportant que la norme MMS, il inclue donc l'adresse MMS de son destinataire à son message EMS, tel que cela est illustré sur la figure 8b.

Le message EMS émis présente alors les particularités suivantes. D'une part, l'adresse destinataire (TP-DA) de l'en-tête (TP Header) de l'EMS est l'adresse de la passerelle de messagerie du domaine de messagerie de l'initiateur du message. D'autre part, le message EMS contient un élément d'information IE dans l'en-tête utilisateur (TP-UDH) indiquant qu'une information de type MMS est contenue dans les données dudit message (TP-DU), cette information étant l'adresse du terminal destinataire. Ainsi, La passerelle de messagerie du domaine du terminal A initiateur du message va recevoir ce message EMS, extraire l'adresse MMS du terminal destinataire B et convertir (C) le message EMS en message fichier de format MIME interprétable par le terminal destinataire B. Par exemple, en convertissant les IE de bitmap du message EMS correspondant à des images en fichiers au format gif ou jpeg associés au message MMS, ou les IE de mélodies du message EMS en fichiers WAV associés au message MMS.

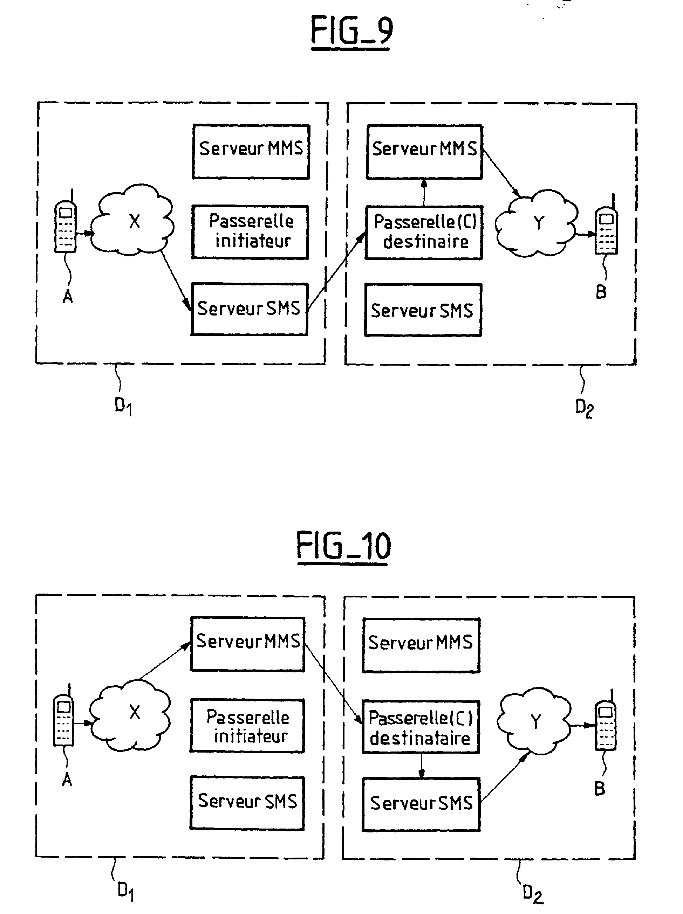

On considère maintenant le cas de la figure 9 dans lequel un terminal A est initiateur d'un message EMS à l'attention d'un terminal destinataire B ne supportant que des messages de type MMS, le terminal A n'étant pas averti de cette limitation du terminal B.

Le terminal A initiateur du message l'envoie sans aucune précaution particulière au serveur SMS de son domaine de messagerie D₁ qui le transmet au domaine destinataire D₂ du terminal B. Or, les messages entrant sont systématiquement réceptionnés par la passerelle de messagerie qui va consulter sa table des profiles. Si le profile du terminal destinataire B avait été EMS alors le message aurait été directement transféré au serveur SMS pour délivrance au terminal destinataire B. En revanche, le profile du terminal destinataire B étant MMS, la passerelle de messagerie destinataire va convertir le message EMS en message MMS avant de le transmettre au serveur MMS du domaine destinataire D₂ pour délivrance au terminal destinataire B.

On considère finalement le cas de la figure 10 dans lequel un terminal A est initiateur d'un message MMS à l'attention d'un terminal destinataire B ne supportant que des messages de type SMS/EMS, le terminal A étant ou non averti de cette limitation du terminal B.

Le message MMS initié par le terminal A est transmis à la passerelle du domaine de messagerie du destinataire comme expliqué dans le cas précédent. La passerelle du domaine destinataire D₂ consulte la table des profiles afin de déterminer quel est le système de messagerie supporté par le terminal destinataire B du message. Dans le cas où la norme associée au terminal B serait la norme SMS/EMS, le message sera converti selon cette norme et transféré au serveur SMS identifié dans la table des profiles du terminal destinataire B pour être délivré selon un procédé classique.

Un autre cas de figure possible, non explicitement illustré, consiste dans l'envoi d'un message EMS par un terminal initiateur utilisant un logiciel d'application plus évolué que celui du terminal destinataire qui ne sera pas en mesure de traiter un tel message, comme par exemple un terminal destinataire muni du logiciel « EMS release 4 » qui ne peut exploiter toutes les données d'un EMS initié par un terminal muni du logiciel « EMS release 5 ». Dans un tel cas, le message EMS est également transmis par le serveur SMS de l'initiateur du message à la passerelle de messagerie du domaine destinataire. La passerelle de messagerie du destinataire vérifie les profiles supportés par le terminal destinataire et convertit le message avant de l'envoyer au serveur SMS du destinataire pour qu'il soit transmis au bon format à son destinataire.

## Revendications

1. Procédé d'échange de messages entre un premier terminal mobile (A) appartenant à un premier domaine de messagerie (D₁) et au moins un second terminal mobile (B) appartenant à un second domaine de messagerie (D₂), chaque domaine (D₁, D₂) comprenant au moins un réseau de radiocommunication, un serveur de messagerie d'une première norme de messages courts et/ou avancés, dite EMS/SMS, Enhanced Message Service/Short Message Service, et/ou un serveur de messagerie d'une seconde norme de messages multimédia, dite MMS, Multimedia Message Service, **caractérisé en ce que** le procédé comporte les étapes suivantes:
- initiation d'un message selon une première norme, EMS ou MMS, depuis un premier terminal (A) à destination d'au moins un second terminal (B) non compatible avec la première norme du message initié;
- transmission du message par le serveur de messagerie de ladite première norme à une passerelle de messagerie comprenant une base de données constituée d'une table des profiles de messagerie des terminaux appartenant au domaine de messagerie (D₁, D₂) auquel ladite passerelle est associée;
- conversion par la passerelle de messagerie du message initié selon la première norme, EMS ou MMS, en message selon une seconde norme, EMS ou MMS, supportée par les terminal aux destinataires (B);
- transmission du message converti selon ladite seconde norme par la passerelle de messagerie au serveur de messagerie de ladite seconde norme;
- délivrance dudit message selon la seconde norme par ledit serveur de la seconde norme aux terminal aux destinataires.

2. Procédé selon la revendication 1, **caractérisé en ce que** la conversion d'un message initié selon une première norme, en un message selon une seconde norme, est effectuée par la passerelle de messagerie du second domaine (D₂) du terminal destinataire (B), ladite passerelle procédant à une étape de détermination de la des normes de message supportées par le terminal destinataire (B) répertorié de sa table des profiles de messagerie.

3. Procédé selon la revendication 1, **caractérisé en ce que** la conversion d'un message initié selon la norme EMS en un message selon la norme MMS est effectuée par la passerelle de messagerie du premier domaine (D₁) du terminal initiateur (A), ledit message EMS incluant l'adresse; TP-DA**,** de ladite passerelle en en-tête, TP-Header, et comprenant un élément d'information, IE, indiquant qu'une donnée de type MMS est incluse dans les données, TP-DU, du message EMS, ladite conversion du message incluant une étape d'extraction de cette donnée MMS.

4. Procédé selon la revendication 1, **caractérisé en ce que** la conversion est effectuée entre un message EMS d'une première version en message EMS d'une seconde version.

5. Procédé selon la revendication 1, **caractérisé en ce que** la table des profiles contenue dans la passerelle de messagerie d'un domaine de messagerie (D₁, D₂) est mise à jour par envoi d'un message court SMS, dit message de mise à jour, depuis un terminal répertorié dans ladite table à destination de la passerelle de messagerie, ledit message de mise à jour comprenant un élément d'information IE contenant les profiles de messagerie dudit terminal.

6. Procédé selon la revendication 5, **caractérisé en ce que** la mise à jour de la table des profiles est effectuée automatiquement par le terminal lors d'un changement de ses capacités de traitement des messages.

7. Procédé selon la revendication 5, **caractérisé en ce que** la mise à jour de la table des profiles est effectuée sur commande de l'utilisateur du terminal.

8. Procédé selon l'une quelconque des revendications précédentes, **caractérisé en ce que** les domaines de messagerie (D₁, D₂) des terminaux initiateur (A) et destinataire (B) du message sont confondus, D₁=D₂.

9. Système de messagerie associé à au moins un domaine de messagerie comprenant au moins un réseau de radiocommunication, un serveur de messagerie d'une première norme de messages courts et/ou avancés, dite EMS/SMS, Enhanced Message Service/Short Message Service, et/ou un serveur de messagerie d'une seconde norme de messages multimédia, dite MMS, Multimedia Message Service, **caractérisé en ce que** ledit domaine de messagerie comprend en outre une passerelle de messagerie comportant une base de données constituée d'une table des profiles de messagerie des terminaux appartenant au domaine de messagerie, ladite passerelle de messagerie étant apte à convertir un message émis dans une première norme, EMS et/ouMMS, en message d'une seconde norme, EMS/MMS.

10. Système de messagerie selon la revendication 9, **caractérisé en ce que** la passerelle de messagerie relie au moins le serveur de messagerie de la première norme dite EMS/SMS et le serveur de messagerie de la seconde norme dite MMS d'un même domaine.

11. Système de messagerie selon l'une des revendications 9 à 10, **caractérisé en ce que** la passerelle de messagerie d'un premier domaine (D₁) est reliée à la passerelle de messagerie d'un second domaine (D₂).

12. Procédé selon l'une des revendications 1 à 8 quelle qu'elle soit ou le système de messagerie selon l'une des revendications 9 à 11 quelle qu'elle soit, pour lesquels le message est un message court selon la norme dite SMS, Short Message Service, initié par un terminal de radiocommunication, ledit message SMS comprenant des données dites utiles constituées d'un en-tête TP-UDH, comprenant des éléments d'informations, IE, et d'un texte de données TP-UD, chaque élément d'information comprenant un champ d'identification, TEI, suivi d'un champ indiquant la longueur des données de l'élément, IEDL, suivi des données de l'élément, IED, **caractérisé en ce que** l'en-tête, TP-UDH comprend un élément d'information dit « de profile », IE-profile, dont l'identifiant, IEI, est associé à la mise à jour d'un profile de messagerie et dont les données, IED, indiquent la/les norme/s, de messages supporté/es par le terminal initiateur.

13. Procédé selon l'une des revendications 1 à 8 quelle qu'elle soit ou le système de messagerie selon l'une des revendications 9 à 11 quelle qu'elle soit, pour lesquels le message est un message avancé selon la norme dite EMS, Enhanced Message Service, initié par un terminal de radiocommunication, ledit message EMS comprenant des données dites utiles constituées d'un en-tête, TP-UDH, comprenant des éléments d'informations, IE, et d'un texte de données, TP-UD, chaque élément d'information comprenant un champ d'identification, IEI, suivi d'un champ indiquant la longueur des données de l'élément, IEDL, suivi des données de l'élément, IED, **caractérisé en ce que** l'en-tête, TP-UDH comprend un élément d'information dit « MMS », IE-MMS, dont l'identifiant IEI, indique la présence d'une information de type MMS contenue dans les données du message, TP-UD, et dont les données, IED, indiquent la longueur de cette information de type MMS, ladite information de type MMS étant constituée d'au moins un en-tête de message MMS.

14. Une passerelle de messagerie pour échanger des messages dans un domaine de messagerie comprenant:
- les moyens de recevoir un message destiné à un terminal mobile appartenant au dit domaine de messagerie, le dit message étant basé sur une première norme ou une deuxième norme, la première norme étant dénommée première norme EMS, Enhanced Messaging Service, et/ou norme SMS, Short Messaging Service, et la deuxième norme étant dénommée deuxième norme EMS et/ou norme MMS, Multimedia Messaging Service;
- une base de données incluant un tableau de profils de message de terminaux mobiles appartenant au dit domaine de messagerie;
- les moyens de déterminer à partir de la dite base de données s'il faut convertir le dit message reçu selon la dite première norme ou la dite deuxième norme en un message converti selon la dite deuxième norme ou la dite première norme, respectivement;
- les moyens de convertir le dit message reçu conformément aux dits moyens de détermination; et
- les moyens de transmettre le dit message converti destiné au dit terminal mobile.

15. Procédé d'échange de messages à une passerelle de messagerie d'un domaine de messagerie comprenant:
- la réception d'un message destiné à un terminal mobile appartenant au domaine de messagerie, le dit message étant basé sur une première norme ou une deuxième norme, la première norme étant dénommée première norme EMS, Enhanced Messaging Service, et/ou norme SMS, Short Messaging Service, et la deuxième norme étant dénommée deuxième norme EMS et/ou norme MMS, Multimedia Messaging Service;
- la détermination, à partir d'une base de données incluant un tableau des profils de message de terminaux mobiles appartenant au dit domaine de messagerie, de la méthode de conversion du dit message reçu selon la dite première norme ou la dite deuxième norme en un message converti selon la dite deuxième norme ou la dite première norme, respectivement;
- la conversion du dit message reçu conformément à la dite étape déterminante; et
- la transmission du dit message converti destiné au dit terminal mobile.

## Claims

1. Method for exchanging messages between a first mobile terminal (A) belonging to a first messaging domain (D₁) and at least one second mobile terminal (B) belonging to a second messaging domain (D₂), each domain (D₁, D₂) comprising at least one radiocommunication network, one messaging server for a first standard for short and/or enhanced messages, referred to as EMS/SMS, Enhanced Message Service/Short Message Service, and/or one messaging server for a second standard for multimedia messages, referred to as MMS, Multimedia Message Service, **characterized in that** the method comprises the following steps:
- initiation of a message according to a first standard, EMS or MMS, from a first terminal (A) to at least one second terminal (B) which is not compatible with the first standard of the initiated message;
- transmission of the message by the messaging server for said first standard to a messaging gateway comprising a database consisting of a table of messaging profiles of the terminals belonging to the messaging domain (D₁, D₂) with which said gateway is associated;
- conversion by the messaging gateway of the message initiated according to the first standard, EMS or MMS, into a message according to a second standard, EMS or MMS, which is supported by the destination terminal or terminals (B);
- transmission by the messaging gateway of the message converted according to said second standard to the messaging server of said second standard;
- delivery of said message according to the second standard by said server for the second standard to the destination terminal or terminals.

2. Method according to claim 1, **characterized in that** the conversion of a message initiated according to a first standard into a message according to a second standard is carried out by the messaging gateway of the second domain (D₂) of the destination terminal (B), said gateway performing a step of determining the message standard or standards supported by the destination terminal (D) listed in its table of messaging profiles.

3. Method according to claim 1, **characterized in that** the conversion of a message initiated according to the EMS standard into a message according to the MMS standard is carried out by the messaging gateway of the first domain (D₁) of the initiating terminal (A), said EMS message including the address, TP-DA, of said gateway in a header, TP-Header, and comprising an information element, IE, indicating that a data item of type MMS is included in the data items, TP-DU, of the EMS message, said conversion of the message including a step of extracting this MMS data item.

4. Method according to claim 1, **characterized in that** the conversion is carried out between a first-version EMS message to a second-version EMS message.

5. Method according to claim 1, **characterized in that** the table of profiles contained in the messaging gateway of a messaging domain (D₁, D₂) is updated by sending a short message SMS, referred to as an update message, from a terminal listed in said table to the messaging gateway, said update message comprising an information element IE containing the messaging profile or profiles of said terminal.

6. Method according to claim 5, **characterized in that** the updating of the table of profiles is carried out automatically by the terminal when there is a change in its message processing capacities.

7. Method according to claim 5, **characterized in that** the updating of the table of profiles is carried out at the request of the user of the terminal.

8. Method according to any one of the preceding claims, **characterized in that** the messaging domains (D₁, D₂) of the message initiating terminal (A) and of the message destination terminal (B) are one and the same, D₁=D₂.

9. Messaging system associated with at least one messaging domain comprising at least one radiocommunication network, one messaging server for a first standard for short and/or enhanced messages, referred to as EMS/SMS, Enhanced Message Service/Short Message Service, and/or one messaging server for a second standard for multimedia messages, referred to as MMS, Multimedia Message Service, **characterized in that** said messaging domain additionally comprises a messaging gateway comprising a database consisting of a table of messaging profiles of the terminals belonging to the messaging domain, said messaging gateway being able to convert a message transmitted in a first standard, EMS and/or MMS, into a message of a second standard, EMS/MMS.

10. Messaging system according to claim 9, **characterized in that** the messaging gateway connects at least the messaging server for the first standard, referred to as EMS/SMS, and the messaging server for the second standard, referred to as MMS, of a given domain.

11. Messaging system according to one of claims 9 to 10, **characterized in that** the messaging gateway of a first domain (D₁) is connected to the messaging gateway of a second domain (D₂).

12. Method according to any one of claims 1 to 8 or messaging system according to any one of claims 9 to 11, for which the message is a short message according to the standard known as SMS, Short Message Service, initiated by a radiocommunication terminal, said SMS message comprising so-called useful data items consisting of a header, TP-UDH, including information elements, IE, and of a data text, TP-UD, each information element comprising an identification field, IEI, followed by a field indicating the length of the data items of the element, IEDL, followed by the data items of the element, IED, **characterized in that** the header, TP-UDH, comprises a so-called "profile" information element, IE-profile, the identifier, IEI, of which is associated with the updating of a messaging profile and the data items, IED, of which indicate the message standard or standards supported by the initiating terminal.

13. Method according to any one of claims 1 to 8 or messaging system according to any one of claims 9 to 11, for which the message is an enhanced message according to the standard known as EMS, Enhanced Message Service, initiated by a radiocommunication terminal, said EMS message comprising so-called useful data items consisting of a header, TP-UDH, including information elements, IE, and of a data text, TP-UD, each information element comprising an identification field, IEI, followed by a field indicating the length of the data items of the element, IEDL, followed by the data items of the element, IED, **characterized in that** the header, TP-UDH, comprises a so-called "MMS" information element, IE-MMS, the identifier, IEI, of which indicates the presence of an information item of MMS type contained in the data items of the message, TP-UD, and the data items, IED, of which indicate the length of this information item of MMS type, said information item of MMS type consisting of at least one MMS message header.

14. Messaging gateway for exchanging messages in a messaging domain, comprising:
- the means for receiving a message destined for a mobile terminal belonging to said messaging domain, said message being based on a first standard or a second standard, the first standard being called the first EMS standard, Enhanced Messaging Service, and/or SMS standard, Short Messaging Service, and the second standard being called the second EMS standard and/or MMS standard, Multimedia Messaging Service;
- a database including a table of message profiles of mobile terminals belonging to said messaging domain;
- the means for determining from said database whether it is necessary to convert said message received according to said first standard or said second standard into a message converted according to said second standard or said first standard, respectively;
- the means for converting said received message in accordance with said determination means; and
- the means for transmitting said converted message destined for said mobile terminal.

15. Method for exchanging messages with a messaging gateway of a messaging domain, comprising:
- the receiving of a message destined for a mobile terminal belonging to the messaging domain, said message being based on a first standard or a second standard, the first standard being called the first EMS standard, Enhanced Messaging Service, and/or SMS standard, Short Messaging Service, and the second standard being called the second EMS standard and/or MMS standard, Multimedia Messaging Service;
- the determination, from a database including a table of message profiles of mobile terminals belonging to said messaging domain, of the method for converting said message received according to said first standard or said second standard into a message converted according to said second standard or said first standard, respectively;
- the conversion of said received message in accordance with said determination step; and
- the transmission of said converted message destined for said mobile terminal.

## Patentansprüche

1. Verfahren zum Austauschen von Nachrichten zwischen einem ersten tragbaren Endgerät (A), das zu einer ersten Maildomäne (D₁) gehört, und mindestens einem zweiten tragbaren Endgerät (B), das zu einer zweiten Maildomäne (D₂) gehört, wobei jede Domäne (D₁, D₂) mindestens ein Funkkommunikationsnetz, einen Mailserver eines ersten Standards von Kurz- und/oder erweiterten Nachrichten, dem so genannten EMS/SMS, Enhanced Message Service/Short Message Service, und/oder einen Mailserver eines zweiten Standards von Multimedianachrichten, dem so genannten MMS, Multimedia Message Service, umfasst, **dadurch gekennzeichnet, dass** das Verfahren die folgenden Schritte umfasst:
- Initiieren einer Nachricht gemäß einem ersten Standard, EMS oder MMS, von einem ersten Endgerät (A) an mindestens ein zweites Endgerät (B), das nicht mit dem ersten Standard der initiierten Nachricht kompatibel ist;
- Übertragen der Nachricht durch den Mailserver des ersten Standards an ein Mail-Gateway, das eine Datenbank umfasst, die aus einer Tabelle von Mailprofilen der Endgeräte besteht, die zu der Maildomäne (D₁, D₂) gehören, mit der das Gateway in Verbindung steht;
- Umwandeln der initiierten Nachricht gemäß dem ersten Standard, EMS oder MMS, durch das Mail-Gateway in eine Nachricht gemäß einem zweiten Standard, EMS oder MMS, der von dem Endgerät bzw. den Endgeräten/dem Empfänger bzw. den Empfängern (B) unterstützt wird;
- Übertragen der durch das Mail-Gateway gemäß dem zweiten Standard umgewandelten Nachricht an den MailServer des zweiten Standards;
- Liefern der Nachricht gemäß dem zweiten Standard durch den Server des zweiten Standards an das Endgerät bzw. die Endgeräte/den Empfänger bzw. die Empfänger.

2. Verfahren nach Anspruch 1, **dadurch gekennzeichnet, dass** das Umwandeln einer initiierten Nachricht gemäß einem ersten Standard in eine Nachricht gemäß einem zweiten Standard von dem Mail-Gateway der zweiten Domäne (D₂) des Empfängerendgeräts (B) durchgeführt wird, wobei das Gateway einen Schritt des Bestimmens des bzw. der Nachrichtenstandards ausführt, der bzw. die von dem Empfängerendgerät (B) unterstützt wird bzw. werden, das in seiner Tabelle von Mailprofilen erfasst ist.

3. Verfahren nach Anspruch 1, **dadurch gekennzeichnet, dass** das Umwandeln einer initiierten Nachricht gemäß dem EMS-Standard in eine Nachricht gemäß dem MMS-Standard von dem Mail-Gateway der ersten Domäne (D₁) des Initiatorendgeräts (A) durchgeführt wird, wobei die EMS-Nachricht die Adresse, TP-DA, des Gateways im Kopf, TP-Header, enthält und ein Informationselement, IE, umfasst, das anzeigt, das ein Datenelement des MMS-Typs in den Daten, TP-DU, der EMS-Nachricht enthalten sind, wobei das Umwandeln der Nachricht einen Schritt des Extrahierens dieses MMS-Datenelements beinhaltet.

4. Verfahren nach Anspruch 1, **dadurch gekennzeichnet, dass** das Umwandeln zwischen einer EMS-Nachricht einer ersten Version in eine EMS-Nachricht einer zweiten Version durchgeführt wird.

5. Verfahren nach Anspruch 1, **dadurch gekennzeichnet, dass** die Tabelle von Profilen, die in dem Mail-Gateway einer Maildomäne (D₁, D₂) enthalten ist, durch Senden einer Kurznachricht, SMS, einer so genannten Aktualisierungsnachricht, von einem Endgerät, das in der Tabelle erfasst ist, an das Mail-Gateway aktualisiert wird, wobei die Aktualisierungsnachricht ein Informationselement, IE, umfasst, das das Mailprofil bzw. die Mailprofile des Endgeräts enthält.

6. Verfahren nach Anspruch 5, **dadurch gekennzeichnet, dass** die Aktualisierung der Tabelle von Profilen von dem Endgerät während einer Änderung seiner Nachrichtenbearbeitungskapazitäten automatisch durchgeführt wird.

7. Verfahren nach Anspruch 5, **dadurch gekennzeichnet, dass** die Aktualisierung der Tabelle von Profilen auf Befehl des Benutzers des Endgeräts durchgeführt wird.

8. Verfahren nach einem der vorhergehenden Ansprüche, **dadurch gekennzeichnet, dass** die Maildomänen (D₁, D₂) des Initiatorendgeräts (A) und des Empfängerendgeräts (B) der Nachricht kombiniert sind, D₁ = D₂.

9. Mailsystem, das mit mindestens einer Maildomäne in Verbindung steht, die mindestens ein Funkkommunikationsnetz, einen Mailserver eines ersten Standards von Kurz- und/oder erweiterten Nachrichten, dem so genannten EMS/SMS, Enhanced Message Service/Short Message Service, und/oder einen Mailserver eines zweiten Standards von Multimedianachrichten, dem so genannten MMS, Multimedia Message Service, umfasst, **dadurch gekennzeichnet, dass** die Maildomäne außerdem ein Mail-Gateway umfasst, das eine Datenbank umfasst, die aus einer Tabelle von Mailprofilen der Endgeräte besteht, die zu der Maildomäne gehören, wobei das Mail-Gateway eine in einem ersten Standard, EMS und/oder MMS, ausgesendete Nachricht in eine Nachricht eines zweiten Standards, EMS/MMS, umwandeln kann.

10. Mailsystem nach Anspruch 9, **dadurch gekennzeichnet, dass** das Mail-Gateway mindestens den Mailserver des ersten Standards, dem so genannten EMS/SMS, und den Mailserver des zweiten Standards, dem so genannten MMS, derselben Domäne verbindet.

11. Mailsystem nach einem der Ansprüche 9 bis 10, **dadurch gekennzeichnet, dass** das Mail-Gateway einer ersten Domäne (D₁) mit dem Mail-Gateway einer zweiten Domäne (D₂) verbunden ist.

12. Verfahren nach einem beliebigen der Ansprüche 1 bis 8 oder Mailsystem nach einem beliebigen der Ansprüche 9 bis 11, bei dem die Nachricht eine Kurznachricht gemäß dem so genannten SMS-Standard, Short Message Service, ist, die von einem Funkkommunikationsendgerät initiiert wurde, wobei die SMS-Nachricht so genannte Nutzdaten umfasst, die aus einem Kopf, TP-UDH, der Informationselemente, IE, umfasst, und einem Datentext, TP-UD, bestehen, wobei jedes Informationselement ein Identifikationsfeld, IEI, umfasst, gefolgt von einem Feld, das die Länge der Daten des Elements angibt, IEDL, gefolgt von Daten des Elements, IED, **dadurch gekennzeichnet, dass** der Kopf, TP-UDH, ein so genanntes "Profil"-Informationselement, IE-Profil, umfasst, dessen Kennung, IEI, mit der Aktualisierung eines Mailprofils in Verbindung steht und dessen Daten, IED, den Standard bzw. die Standards der Nachrichten angeben, der bzw. die von dem Initiatorendgerät unterstützt wird bzw. werden.

13. Verfahren nach einem beliebigen der Ansprüche 1 bis 8 oder Mailsystem nach einem beliebigen der Ansprüche 9 bis 11, bei dem die Nachricht eine erweiterte Nachricht gemäß dem so genannten EMS-Standard, Enhanced Message Service, ist, die von einem Funkkommunikationsendgerät initiiert wurde, wobei die EMS-Nachricht so genannte Nutzdaten umfasst, die aus einem Kopf, TP-UDH, der Informationselemente, IE, umfasst, und einem Datentext, TP-UD, bestehen, wobei jedes Informationselement ein Identifikationsfeld, IEI, umfasst, gefolgt von einem Feld, das die Länge der Daten des Elements angibt, IEDL, gefolgt von Daten des Elements, IED, **dadurch gekennzeichnet, dass** der Kopf, TP-UDH, ein so genanntes "MMS"-Informationselement, IE-MMS, umfasst, dessen Kennung, IEI, das Vorliegen einer Information des MMS-Typs anzeigt, die in den Daten der Nachricht, TP-DU, enthalten ist, und dessen Daten, IED, die Länge dieser Information des MMS-Typs angeben, wobei die Information des MMS-Typs aus mindestens einem MMS-Nachrichtenkopf besteht.

14. Mail-Gateway zum Austauschen von Daten in einer Maildomäne, wobei das Mail-Gateway Folgendes umfasst:
- Mittel zum Empfangen einer Nachricht, die für ein tragbares Endgerät bestimmt ist, das zu der Maildomäne gehört, wobei die Nachricht auf einem ersten Standard oder einem zweiten Standard basiert, wobei der erste Standard als erster EMS-Standard, Enhanced Messaging Service, und/oder SMS-Standard, Short Messaging Service, bezeichnet wird und der zweite Standard als zweiter EMS-Standard und/oder MMS-Standard, Multimedia Messaging Service, bezeichnet wird;
- eine Datenbank, die eine Tabelle von Mailprofilen von tragbaren Endgeräten, die zu der Maildomäne gehören, enthält;
- Mittel zum Bestimmen, ausgehend von der Datenbank, ob die empfangene Nachricht gemäß dem ersten Standard oder dem zweiten Standard in eine gemäß dem zweiten Standard bzw. dem ersten Standard umgewandelte Nachricht umgewandelt werden muss;
- Mittel zum Umwandeln der empfangenen Nachricht entsprechend den Bestimmungsmitteln und
- Mittel zum Übertragen der umgewandelten Nachricht, die für das tragbare Endgerät bestimmt ist.

15. Verfahren zum Austauschen von Nachrichten mit einem Mail-Gateway einer Maildomäne, wobei das Verfahren Folgendes umfasst:
- den Empfang einer Nachricht, die für ein tragbares Endgerät bestimmt ist, das zu der Maildomäne gehört, wobei die Nachricht auf einem ersten Standard oder einem zweiten Standard basiert, wobei der erste Standard als erster EMS-Standard, Enhanced Messaging Service, und/oder SMS-Standard, Short Messaging Service, bezeichnet wird und der zweite Standard als zweiter EMS-Standard und/oder MMS-Standard, Multimedia Messaging Service, bezeichnet wird;
- die Bestimmung, ausgehend von einer Datenbank, die eine Tabelle von Mailprofilen von tragbaren Endgeräten, die zu der Maildomäne gehören, enthält, des Verfahrens zum Umwandeln der empfangenen Nachricht gemäß dem ersten Standard oder dem zweiten Standard in eine gemäß dem zweiten Standard bzw. dem ersten Standard umgewandelte Nachricht;
- die Umwandlung der empfangenen Nachricht entsprechend dem Bestimmungsschritt und
- die Übertragung der umgewandelten Nachricht, die für das tragbare Endgerät bestimmt ist.
